# EUROPÄISCHE PATENTSCHRIFT

(11) **EP 3 671 546 B1**
(45) Veröffentlichungstag und Bekanntmachung des Hinweises auf die Patenterteilung: **15.07.2026**
(21) Anmeldenummer: 19217199.9
(22) Anmeldetag: 17.12.2019
(51) Int. Cl.: G06V 20/56, G06V 10/82, G06V 20/58

(54) **VERFAHREN UND SYSTEM ZUM BESTIMMEN VON LANDMARKEN IN EINER UMGEBUNG EINES FAHRZEUGS**
METHOD AND SYSTEM FOR DETERMINING LANDMARKS IN AN ENVIRONMENT OF A VEHICLE
PROCÉDÉ ET SYSTÈME DE DÉTERMINATION DES REPÈRES DANS UN ENVIRONNEMENT D'UN VÉHICULE

(30) Priorität: 21.12.2018 DE 102018133441
(43) Veröffentlichungstag der Anmeldung: 24.06.2020
(73) Patentinhaber: Volkswagen AG, 38440 Wolfsburg (DE)
(72) Erfinder: Wappler, Stefan, 10717 Berlin (DE); Hüger, Philipp, 38471 Rühen (DE)

(56) Entgegenhaltungen:
- WO-A2-2018/104563
- QI CHARLES R ET AL: "Frustum PointNets for 3D Object Detection from RGB-D Data", 2018 IEEE/CVF CONFERENCE ON COMPUTER VISION AND PATTERN RECOGNITION, IEEE, 18 June 2018 (2018-06-18), pages 918 - 927, XP033476053, DOI: 10.1109/CVPR.2018.00102
- LI LIU ET AL: "Deep Learning for Generic Object Detection: A Survey", INTERNATIONAL JOURNAL OF COMPUTER VISION., vol. 128, no. 2, 6 September 2018 (2018-09-06), US, pages 261 - 318, XP055676998, ISSN: 0920-5691, DOI: 10.1007/s11263-019-01247-4

## Beschreibung

Die vorliegende Erfindung betrifft ein Verfahren zum Bestimmen von Landmarken in einer Umgebung eines Fahrzeugs. Sie betrifft ferner ein System zum Bestimmen von Landmarken in einer Umgebung eines Fahrzeugs.

Moderne Fahrzeuge umfassen eine Vielzahl von Fahrfunktionen, die eine zumindest teilweise automatische Durchführung bestimmter Fahraufgaben erlauben. Eine wesentliche Voraussetzung hierfür ist ein genaues Wissen über die Umgebung des Fahrzeugs, insbesondere seine Position relativ zu Objekten, die für die Steuerung relevant sind. Um dieses Wissen zu erfassen, kann eine Vielzahl verschiedener Sensoren verwendet werden. Die Auswertung der auf diese Weise zu verarbeitenden Daten stellt bei bekannten Systemen jedoch weiterhin eine große Herausforderung dar.

In der US 9,953,236 B1 wird ein Verfahren zur semantischen Segmentierung von Bilddaten. Dabei wird eine *Dense Upsampling Convolution* (DUC) durchgeführt und Maschinenlernverfahren werden genutzt.

Aus der WO 2018/104563 A2 ist ein Verfahren zur videobasierten Positionsbestimmung bekannt, wobei eine semantische Segmentierung durchgeführt wird. Objekte werden identifiziert und zum Detektieren von Landmarken genutzt. Es wird eine visuelle Odometrie durchgeführt.

Die US 2018/0089505 A1 schlägt ein Verfahren zur Objektdetektion in einem Bild vor, bei dem Wahrscheinlichkeiten für die Identifikation bestimmter Objekt-Kandidaten bestimmt werden. Durch eine Skalierung und das Bestimmen von Schwellenwerten für diese Wahrscheinlichkeiten sollen Fehldetektionen verhindert werden.

Der vorliegenden Erfindung liegt die Aufgabe zugrunde, ein Verfahren und ein System bereitzustellen, die eine besonders effiziente Bestimmung von Landmarken erlaubt.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren der eingangs genannten Art werden erste Umgebungsdaten erfasst. Es wird zumindest eine Teilmenge der ersten Umgebungsdaten bestimmt und der bestimmten Teilmenge wird eine Kategorie aus einer Vielzahl verschiedener Kategorien zugeordnet. In Abhängigkeit von einem Landmarkentyp wird eine Kategorie bestimmt und es wird eine auf die Teilmenge der bestimmten Kategorie beschränkte Landmarkendetektion durchgeführt.

Die Landmarkendetektion erfolgt dadurch vorteilhafterweise besonders schnell und unter optimaler Ausnutzung der Ressourcen im Fahrzeug. Ferner können Fehldetektionen vermieden und die Ausgangsdaten zur Detektion von Landmarken für das Durchführen der Detektion optimiert werden. Das Verfahren gewährleistet ferner eine verbesserte Wartbarkeit und Testbarkeit, da fehlerhafte Landmarkendetektionen in ungeeigneten Teilbereichen vermieden werden können.

Im Unterschied zu aus dem Stand der Technik bekannten Verfahren wird beim Bestimmen der Teilmenge der ersten Umgebungsdaten nicht nach dem Vorkommen von Landmarken gesucht, sondern es können zum Beispiel Bereiche bestimmt und kategorisiert werden, in denen bestimmte Landmarkentypen gesucht werden sollen oder nicht zu erwarten sind.

Der Begriff "Landmarken" umfasst im Sinne der Erfindung Merkmale und/oder Muster in einer Umgebung, die identifiziert werden können und denen zumindest eine Ortsinformation zugeordnet werden kann. Dies können beispielsweise charakteristische Punkte oder Objekte sein, die an bestimmten Positionen in der Umgebung angeordnet sind. Die Landmarken können eine Semantik aufweisen, das heißt sie können als solche auch für die menschliche Wahrnehmung als identifizierbare Objekte oder Merkmale (Features) identifizierbar sein. Ferner sind auch Landmarken umfasst, die keine Semantik aufweisen, sondern beispielsweise abstrakte Muster repräsentieren, die durch eine Mustererkennung detektierbar sind.

Den Landmarken können auf an sich bekannte Weise Landmarkentypen zugeordnet werden, insbesondere anhand geometrischer Eigenschaften oder anhand einer Semantik, die mit den Landmarken verbunden ist. So können beispielsweise Fahrbahnmarkierungen, Pfosten, Schilder, Bauwerke, Elemente einer Vegetation oder Bauwerke von Verkehrsleitsystemen jeweils als bestimmte Landmarkentypen definiert sein. Ferner können mehrere spezielle Landmarkentypen, etwa "Stoppschilder" und "Parkverbotsschilder", einem allgemeineren oder generischen Landmarkentyp, etwa "Schilder", zugeordnet sein. Insbesondere wird bei dem Verfahren jeder Landmarke zumindest ein Landmarkentyp zugeordnet. Eine konkrete Landmarke kann dabei auch mehreren speziellen und/oder allgemeinen Landmarkentypen zugeordnet sein.

Landmarkentypen können etwa Kanten oder andere Teile von Bauwerken, Markierungen auf einer Fahrbahn, Verkehrsführungseinrichtungen oder zweidimensionale Codes sein. Beispielsweise können Spurmarkierungen, Abbiegepfeile, Parkplatzmarkierungen oder ähnliche Bodenmarkierungen, Pfosten, Stangen, Säulen, Verkehrs- oder andere Schilder, Signalanlagen oder Ampeln, Gebäudekanten oder -ecken, Rohre, QR- oder Barcodes sowie alphanumerische Darstellungen detektiert werden. Analog dazu können weitere Merkmale für eine Lokalisierung verwendet werden, die charakteristische, lokalisierbare Punkte in einer geografischen Umgebung der Eigenposition bezeichnen. Im Allgemeinen handelt es sich um Merkmale, die mittels eines Mustererkennungsverfahrens identifiziert und denen Positionsdaten zugeordnet werden können.

Bei einer Ausbildung des erfindungsgemäßen Verfahrens werden die ersten Umgebungsdaten mittels einer Kamera erfasst. Dadurch können vorteilhafterweise vorhandene Einrichtungen des Fahrzeugs genutzt werden, um relevante Umgebungsdaten zu erfassen. Die Kamera erfasst Bilddaten, insbesondere als zeitlich geordnete Folge von Einzelbildern, die zu Videodaten zusammengefasst werden können. Die Umgebungsdaten können ferner auf andere an sich bekannte Weise erfasst werden, etwa mittels Sensoren eines Fahrzeugs wie optischen, Radar-, Lidar- oder Ultraschallsensoren.

Ferner kann vorgesehen sein, dass Umgebungsdaten von einer externen Einrichtung erfasst und mittels einer Schnittstelle empfangen werden. Es kann sich dabei beispielsweise um einen fest installierten Sensor zur Verkehrsbeobachtung handeln, der Umgebungsdaten erfasst und bereitstellt. Ferner kann ein externer Server verwendet werden, der relevante Umgebungsdaten empfängt, speichert und bei Bedarf bereitstellt. Solche Umgebungsdaten können etwa von bestimmten oder einer Vielzahl von Fahrzeugen und Einrichtungen entlang einer Fahrstrecke erfasst und an den Server übertragen werden.

Es kann zwischen verschiedenen Typen von Sensoren unterschieden werden, wobei ein Sensor eines spezifischen Sensortyps Umgebungsdaten nach einem bestimmten physikalischen Messprinzip erfasst. Beispielsweise sind Radarsensoren Sensoren eines ersten Typs und Ultraschallsensoren Sensoren eines weiteren Typs. Zudem kann eine weitere Differenzierung vorgenommen werden, beispielsweise eine Unterscheidung verschiedener Typen von Radarsensoren, die sich beispielsweise in ihrer Bauweise und/oder einer besonderen Art der Datenverarbeitung voneinander unterscheiden.

Die Umgebungsdaten werden ferner in einem bestimmten Erfassungsraum erfasst, der insbesondere durch den Sensortyp und/oder eine spezifische Ansteuerung der Sensoren bedingt sein kann. Der Erfassungsraum kann beispielsweise durch einen Winkel im Raum sowie einen Abstand oder Radius relativ zu dem Fahrzeug definiert sein. Es können ferner mehrere Sensoren, insbesondere eines gemeinsamen Sensortyps, in Kombination verwendet werden, um durch Zusammenfassen der erfassten Umgebungsdaten zu einem vergrößerten Erfassungsraum zu gelangen. Zum Beispiel kann eine Kamera Bilddaten in einem bestimmten Blickwinkel erfassen und eine Kombination mehrerer Kameras kann einen größeren Erfassungsraum abdecken und beispielsweise eine Rundumsicht um das Fahrzeug ermöglichen.

Bei dem Verfahren wird die Landmarkendetektion auf eine Teilmenge der erfassten ersten Umgebungsdaten beschränkt und das Volumen der zu analysierenden Umgebungsdaten auf diese Weise reduziert. Hierzu kann beispielsweise eine semantische Segmentierung der erfassten ersten Umgebungsdaten vorgenommen werden, bei der für Teilmengen der Umgebungsdaten jeweils eine Klassifizierung vorgenommen und ihnen eine Kategorie zugeordnet wird. Insbesondere erfolgt eine Klassifizierung für jeden Bildpunkt von erfassten Bilddaten. Dabei können Bildpunkte, die einer gemeinsamen Kategorie zugeordnet werden, zu einzelnen Teilmengen oder Segmenten zusammengefasst werden, insbesondere wenn sie eine zusammenhängende Fläche bilden.

Bei einer Weiterbildung des Verfahrens wird die Teilmenge mittels eines Maschinenlernverfahrens bestimmt. Die Bestimmung der Teilmenge und gegebenenfalls auch die Zuordnung einer Kategorie können dadurch vorteilhafterweise besonders flexibel und zuverlässig umgesetzt werden.

Dabei wird insbesondere ein trainierter Klassifikator eingesetzt, der anhand von Trainingsdaten zum Erkennen bestimmter Kategorien anhand der erfassten Umgebungsdaten ausgebildet ist. Es werden an sich bekannte Verfahren aus dem Bereich des maschinellen Lernens beziehungsweise der künstlichen Intelligenz verwendet, etwa ein neuronales Netz, ein *Deep-Learning-System* oder ein geeignetes statistisches Verfahren.

Bei einer Ausbildung umfassen die Kategorien einen Boden, eine Fahrbahn, eine Vegetation, einen bebauten Bereich, eine Säule, ein stehendes oder fahrendes Fahrzeug oder eine Person. Die Kategorien entsprechen daher im Wesentlichen Objektklassen. Die den Teilmengen zugeordneten Kategorien sind dadurch vorteilhafterweise besonders gut dazu geeignet, geeignete Teilmengen der Umgebungsdaten zum Detektieren bestimmter Landmarkentypen zu bestimmen.

Bei einer weiteren Ausbildung wird die Landmarkendetektion anhand eines heuristischen Verfahrens durchgeführt. Die Detektion erfolgt dabei vorteilhafterweise auf bekannte und sichere Weise anhand von vorgegebenen Detektormodulen, die eine zuverlässig erkennbare Charakterisierung der Landmarken umfassen. Bei dem heuristischen Verfahren erfolgt die Detektion insbesondere anhand fester, vorgegebener Regeln zur Detektion bestimmter Merkmale von Landmarken eines spezifischen Landmarkentyps.

Landmarken eines bestimmten Landmarkentyps können anhand eines Musters beschrieben werden, welches dazu geeignet ist, eine Landmarke des bestimmten Landmarkentyps in Umgebungsdaten zu detektieren. Die hierzu verwendeten Informationen können etwa eine mathematisch formulierte Beschreibung zur Erkennung eines Musters umfassen, mit welchem eine Landmarke beziehungsweise ein Merkmal der Umgebung in den Signalen eines Sensors abgebildet wird. Es können beispielsweise geometrische Eigenschaften von Objekten eines Landmarkentyps beschrieben werden, aber auch Materialeigenschaften, wie beispielsweise Reflektanzwerte oder mathematische Funktionen, wie etwa Gradienten von Hell-Dunkel-Übergängen.

Solche Beschreibungen zum Detektieren von Landmarken eines Landmarkentyps sind im Allgemeinen sensorspezifisch, sodass sinnvollerweise für die verschiedenen Typen von Sensoren eigene Musterbeschreibungen für die Detektion zur Verfügung gestellt werden können. Beispielsweise unterscheidet sich die Erkennung von Mustern in einem Bild einer optischen Kamera von der Erkennung innerhalb einer Punktwolke, die ein Laserscanner detektiert. Es können allerdings auch generische, für mehrere Sensortypen geeignete Informationen zur Detektion bereitgestellt werden. Ferner können die von einem bestimmten Sensortyp erfassten Daten so verarbeitet werden, dass auf sie das gleiche Detektionsverfahren wie für Daten eines anderen Sensortyps anwendbar ist.

Die Detektion der Landmarken anhand der Umgebungsdaten erfolgt beispielsweise anhand von Mustererkennungsverfahren, mittels derer die Landmarken beispielsweise in Kamerabildern oder Laserpunktwolken erkannt werden können. Hierzu werden sogenannte "Detektormodule" verwendet. Dabei handelt es sich insbesondere um Softwaremodule, die beispielsweise eine speicherbare Datei umfassen. Die Detektormodule sind so ausgebildet, dass mit ihrer Hilfe anhand der erfassten Umgebungsdaten Landmarken eines bestimmten Landmarkentyps detektiert werden können. Insbesondere können die Detektormodule spezifisch für die Detektion eines bestimmten Landmarkentyps ausgebildet sein. Es kann vorgesehen sein, dass jeder detektierten Landmarke zumindest ein Landmarkentyp zugeordnet wird.

Insbesondere wird bei dem Verfahren beim Bestimmen der Teilmenge zunächst, insbesondere anhand eines Verfahrens der künstlichen Intelligenz, eine grobe Klassifizierung von Bereichen innerhalb der Umgebungsdaten vorgenommen, in denen dann gezielt Landmarken eines bestimmten Landmarkentyps detektiert werden können, wobei zur Detektion insbesondere ein heuristisches Verfahren verwendet wird. Umgekehrt können andere Teilmengen anhand der ihnen zugeordneten Kategorien beim Detektieren der Landmarken für einen bestimmten Landmarkentyp ausgenommen werden, etwa weil kein Vorkommen einer bestimmten Landmarke in bestimmten Bereichen der Umgebungsdaten zu erwarten ist. Die Teilmenge entspricht daher insbesondere einem ausgewählten Bereich, etwa einer sogenannten *region of interest* (ROI) für die Suche nach Landmarken eines bestimmten Landmarkentyps. Bei derartigen Bildbereiche ist es zur weiteren Verarbeitung von großer Wichtigkeit, dass diese möglichst genau ermittelt werden und die tatsächlich relevanten Bereiche abbilden, sodass Fehldetektionen in falsch identifizierten Bereichen ebenso vermieden werden wie das fehlerhafte Ignorieren von nicht richtig klassifizierten Bereichen. Die ROls dürfen also weder zu klein noch zu groß definiert werden, was bei dem Verfahren durch die Bestimmung der Teilmenge, insbesondere mittels künstlicher Intelligenz, vermieden wird.

Zum Beispiel werden Landmarken des Landmarkentyps "Fahrbahnmarkierungen" auf einer Fahrbahn erwartet, das heißt in einer Teilmenge der Umgebungsdaten, die beispielsweise zur Kategorie "Fahrbahn" gehört. Umgekehrt werden Landmarken dieses Landmarkentyps nicht in Bereichen erwartet, die zum Beispiel als "stehendes Fahrzeug" kategorisiert wurden. Auf diese Weise können zum Beispiel Fehldetektionen aufgrund von Spiegelungen einer Landmarke vermieden werden.

Dabei können einer Teilmenge auch mehrere Kategorien zugeordnet werden, beispielsweise wenn eine Kategorie von einer anderen Kategorie umfasst ist.

Bei einer weiteren Ausbildung des Verfahrens wird anhand der bestimmten Teilmenge ein räumlicher Bereich in der Umgebung des Fahrzeugs bestimmt und es werden weitere an Oberflächen Umgebungsdaten erfasst, wobei zum Erfassen der weiteren Umgebungsdaten ein anderer Sensortyp verwendet wird als zum Erfassen der ersten Umgebungsdaten. Die Landmarkendetektion wird ferner anhand der weiteren Umgebungsdaten und in Abhängigkeit von dem räumlichen Bereich durchgeführt. Dies ermöglicht es vorteilhafterweise, die anhand der ersten Umgebungsdaten gewonnenen Informationen auch für von anderen Sensoren erfassten Umgebungsdaten zu nutzen.

Zum Beispiel werden als erste Umgebungsdaten Bilddaten erfasst. Anhand dieser Bilddaten wird zunächst eine Teilmenge bestimmt und so einer Kategorie zugeordnet, dass anhand dieser Teilmenge ein bestimmter Landmarkentyp detektiert wird. Der Teilmenge entspricht ein räumlicher Bereich in der Fahrzeugumgebung, in dem auch anhand anderer Sensoren eines anderen Sensortyps Daten erfasst werden. Zum Beispiel können dort Daten eines Lidar-Sensors erfasst werden. Bei der Auswertung der Daten des Lidar-Sensors, insbesondere bei der Landmarkendetektion für den bestimmten Landmarkentyp, kann nun eine Filterung so vorgenommen werden, dass die Landmarkendetektion anhand der Lidar-Daten auf den gleichen räumlichen Bereich beschränkt wird beziehungsweise dass weitere räumliche Bereiche von der Landmarkendetektion ausgenommen werden.

Bei einer weiteren Ausbildung werden zudem die weiteren Umgebungsdaten lediglich in dem räumlichen Bereich erfasst, zum Beispiel indem eine Erfassungseinheit des anderen Sensortyps so angesteuert wird, dass die Erfassung auf den räumlichen Bereich beschränkt wird. Dadurch kann vorteilhafterweise die Menge der anfallenden Daten reduziert werden. In der Folge werden Rechenzeiten sowie Latenzzeiten bei einer Übertragung der Daten, etwa innerhalb des Fahrzeugs oder zu einer externen Einheit, verringert.

Diese räumlichen Bereiche können auch über einen längeren Zeitraum gespeichert und beim Erfassen der weiteren Umgebungsdaten, etwa in weiteren Zeitschritten, verwendet werden. Beispielsweise kann ein Erfassungsbereich eines Sensors oder der für das Detektieren eines bestimmten Landmarkentyps relevante Bereich durch ein Steuergerät des Sensors gespeichert und für eine Filterung der erfassten Daten genutzt werden.

Bei einer Ausbildung wird die Teilmenge von einer mobilen Einheit, insbesondere von dem Fahrzeug, an eine externe Einheit übertragen und die Landmarkendetektion wird durch die externe Einheit durchgeführt. Die externe Einheit kann beispielsweise ein externer Server oder eine Backend-Einrichtung sein, die mit der mobilen Einheit datentechnisch gekoppelt ist. Dadurch kann die Landmarkendetektion vorteilhafterweise durch eine Einheit durchgeführt werden, die über größere Ressourcen als die mobile Einheit verfügt.

Dabei ermöglicht das Verfahren der Erfindung eine erhebliche Reduktion der zu übertragenen Daten, da für die Landmarkendetektion lediglich die Teilmenge einer passenden Kategorie übertragen werden muss. Gerade bei einer Datenübertragung über Funkwellen kann dadurch die zur Verfügung stehende Bandbreite besonders effizient genutzt werden. Die externe Einheit kann ferner über stets aktualisierte Detektoren für verschiedene Landmarkentypen verfügen und daher beispielsweise auch eine Detektion von solchen Landmarken erlauben, für die sonst bei der mobilen Einheit eine aufwendige Softwareaktualisierung durchgeführt werden müsste.

Bei einer weiteren Ausbildung werden Anforderungsdaten von der externen Einheit erzeugt und die Teilmenge wird in Abhängigkeit von den Anforderungsdaten an die externe Einheit übertragen. Die externe Einheit kann dadurch vorteilhafterweise die benötigten Daten gezielt anfordern.

Die Anforderungsdaten umfassen insbesondere Informationen über eine Kategorie, anhand welcher die zu übertragende Teilmenge gebildet wird. In diesem Fall kann die externe Einheit zunächst einen bestimmten Landmarkentyp definieren, für den eine Landmarkendetektion durchgeführt werden soll, und durch die Anforderungsdaten können die dafür geeigneten Umgebungsdaten von der mobilen Einheit angefordert werden.

Bei einer Weiterbildung werden bei der Landmarkendetektion Positionsdaten für Landmarken des Landmarkentyps bestimmt und ausgegeben. Anhand der Positionsdaten wird eine Pose des Fahrzeugs bestimmt. Die Bestimmung einer solchen Pose ist beispielsweise eine Voraussetzung zum Durchführen einer teilweise oder vollständig automatischen Fahrt des Fahrzeugs.

Dabei werden den detektierten Landmarken Positionsdaten zugeordnet, wobei insbesondere den Landmarke eine Position oder eine Pose in einem Koordinatensystem zugeordnet wird. Dies kann im Detektionsschritt oder in einem separaten Schritt erfolgen. Die Position oder Pose kann dabei insbesondere in Abhängigkeit von dem zugeordneten Landmarkentyp bestimmt werden, indem für bestimmte Landmarkentypen beispielsweise bestimmte Achsen zum Bestimmen der Lage der Landmarke definiert werden oder indem bestimmte Abschnitte einer Landmarke zur Bestimmung der Position der Landmarke dienen. Dabei kann ein globales oder relatives Koordinatensystem verwendet werden, beispielweise ein Relativsystem relativ zu einer Erfassungseinheit oder einem Fahrzeug.

Neben den Positionsdaten können weitere Merkmale für die detektierten Landmarken bestimmt werden, etwa ihre Größe und Form, Farbe, ein Parameter zum Beschreiben dynamischer Merkmale, oder durch Auswertung einer Beschriftung.

Die Pose des Fahrzeugs umfasst Informationen über seine Position und Ausrichtung in einem bestimmten Koordinatensystem, etwa einem globalen Koordinatensystem oder einem relativen Koordinatensystem.

Zum Bestimmen der Pose werden zunächst die Landmarken durch das Fahrzeug erfasst und ihre Positionen werden relativ zu dem Fahrzeug bestimmt. Ferner werden Kartendaten erfasst, die ebenfalls Positionsdaten für die Landmarken umfassen, das heißt Informationen über ihre Lage in einem Koordinatensystem. Es kann sich um ein globales oder relatives Koordinatensystem handeln. Die Positionsdaten betreffen insbesondere Posen der Landmarken, das heißt eine Kombination ihrer Position und ihrer Lage, beschrieben etwa anhand ihrer Ausrichtung relativ zu anderen Landmarken. Beispielsweise kann ein Pfeil in eine bestimmte Richtung im Raum zeigen, ein Pfosten kann eine bestimmte Länge haben und in einem bestimmten Winkel zu einer Fahrbahn verlaufen oder eine Kante eines Bauwerks kann sich in einer bestimmten Lage relativ zu einer Fahrbahn befinden.

Es wird eine Transformation bestimmt, anhand derer die Positionen der Landmarken im Fahrzeugsystem in das Koordinatensystem der Kartendaten transformiert werden können. Aus dieser Transformation ergibt sich die Position und insbesondere auch die Ausrichtung des Fahrzeugs im Koordinatensystem der Kartendaten.

Bei einer Ausbildung wird die Landmarkendetektion anhand eines Maschinenlernverfahrens durchgeführt. Das Maschinenlernen wird dabei vorteilhafterweise nicht nur zur Bestimmung der Teilmenge, sondern auch zum Detektieren der Landmarken genutzt. Indem die Landmarkendetektion anhand der Teilmenge der Umgebungsdaten durchgeführt wird, kann auch das Maschinenlernen auf kleinere Datenmengen beschränkt werden.

Auch hier können unterschiedliche, an sich bekannte Verfahren zur Anwendung kommen. Anhand von Beispieldatensätzen wird ein Training durchgeführt, bei dem das System automatisch die Erkennung bestimmter Muster für einzelne Landmarken lernt. Anders als bei einem heuristischen Verfahren, werden hier keine fest vorgegebenen Systeme von Regeln zur Erkennung der Landmarken vorgegeben, sondern die Erkennung basiert auf den Datensätzen für das Training.

Das Verfahren wird allerdings auch dann zweistufig durchgeführt, wenn sowohl die Bestimmung der Teilmenge als auch die Landmarkendetektion anhand eines Maschinenlernverfahrens erfolgt: Zunächst wird die Segmentierung der Umgebungsdaten durchgeführt, verbunden mit der Zuordnung von Kategorien zu Teilmengen der Umgebungsdaten. Anschließend wird die Landmarkendetektion durchgeführt, wobei lediglich diejenigen Teilmengen berücksichtigt werden, denen jeweils geeignete Kategorien für die zu detektierenden Landmarkentypen zugeordnet wurden.

Bei einer weiteren Ausbildung werden anhand der Teilmenge Trainingsdaten erzeugt und anhand der Trainingsdaten wird ein Training für die Landmarkendetektion anhand des Maschinenlernverfahrens ausgeführt. Das Training kann so vorteilhafterweise besonders gezielt erfolgen.

Das Training kann beispielsweise durch eine externe Einheit durchgeführt werden, welche die Landmarkendetektion vornimmt. Die Kategorisierung der Teilmengen der Umgebungsdaten erleichtert es, relevante Trainingsdaten zur Verfügung zu stellen. Die automatische Detektion der Landmarken kann hierdurch weiter verbessert werden.

Ferner können anhand der Trainingsdaten Detektormodule für Landmarken eines bestimmten Landmarkentyps erzeugt oder aktualisiert werden. Die Landmarkendetektion kann anschließend wieder auf andere Weise als ein Maschinenlernverfahren erfolgen, insbesondere anhand eines heuristischen Verfahrens. Die Detektormodule können insbesondere durch Maschinenlernen vollständig neu erzeugt werden, insbesondere um neue Landmarkentypen detektieren zu können, oder es kann ein verbessertes Detektormodul erzeugt werden.

Zur Landmarkendetektion kann ein *Sliding-window-Verfahren* verwendet werden, bei dem ein "Fenster" zum Rastern der Umgebungsdaten zum Detektieren der Landmarken verwendet wird. Ein solches Fenster muss in seiner Größe und gegebenenfalls auch Form so gebildet sein, dass die zu detektierenden Landmarken darin aufgefunden werden können.

Das erfindungsgemäße System der eingangs genannten Art umfasst eine Erfassungseinheit zum Erfassen erster Umgebungsdaten und eine Segmentierungseinheit zum Bestimmen zumindest einer Teilmenge der ersten Umgebungsdaten und zum Zuordnen einer Kategorie aus einer Vielzahl verschiedener Kategorien zu der bestimmten Teilmenge. Das System umfasst ferner eine Recheneinheit zum Bestimmen einer Kategorie in Abhängigkeit von einem Landmarkentyp und zum Durchführen einer Landmarkendetektion für den Landmarkentyp. Dabei ist die Recheneinheit dazu eingerichtet, die Landmarkendetektion auf die Teilmenge der bestimmten Kategorie beschränkt durchzuführen.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Systems umfasst die Erfassungseinheit eine Kamera. Alternativ oder zusätzlich können andere Sensortypen vorgesehen sein, etwa basierend auf Radar, Lidar, Ultraschall oder verschiedene optische Sensoren, etwa Infrarot-, *Time-of-Flight-* oder Stereokameras. Dadurch können vorteilhafterweise bereits verbreitete Sensorsysteme von Fahrzeugen genutzt werden.

Insbesondere wird anhand der bestimmten Teilmenge ein räumlicher Bereich bestimmt und es wird eine Filterung der von der Erfassungseinheit erfassten Umgebungsdaten durchgeführt. Dabei wird insbesondere bestimmt, welche Teilmengen von Umgebungsdaten, die durch andere Sensortypen erfasst wurden, dem bestimmten räumlichen Bereich für die Teilmenge entsprechen. Beispielsweise wird anhand von Bilddaten ein räumlicher Bereich bestimmt, für den auch ein Lidar-Sensor Umgebungsdaten erfasst. Um Landmarken in dem räumlichen Bereich besser detektieren zu können, können auch die Umgebungsdaten des weiteren Sensortyps so gefiltert werden, dass die dort erfassten Umgebungsdaten für die Landmarkendetektion verwendet werden können. In weiteren Bereichen erfasste Umgebungsdaten können dagegen verworfen werden.

Bei einer weiteren Ausbildung steuert ein Steuergerät die Segmentierungseinheit so an, dass lediglich die Teilmenge der erfassten Umgebungsdaten an die Recheneinheit übertragen wird. Insbesondere werden mehrere Teilmengen, die anhand der ihnen zugeordneten Kategorien für einen Landmarkentyp bestimmt werden, an die Recheneinheit übertragen. Dadurch kann vorteilhafterweise die im Fahrzeug zur Verfügung stehende Bandbreite zur Übertragung der Umgebungsdaten besonders effizient genutzt werden. Insbesondere umfasst das Steuergerät die Segmentierungseinrichtung und führt bereits auf der Ebene der Erfassung und der dazu verwendeten Sensoren die Bestimmung der Teilmenge durch.

Bei einer Weiterbildung umfasst das System ferner eine Schnittstelle zu einer externen Einheit und das System ist dazu eingerichtet, die bestimmte Teilmenge an die externe Einheit zu übertragen, wobei die externe Einheit dazu eingerichtet ist, anhand der Teilmenge die Landmarkendetektion durchzuführen. Insbesondere überträgt die externe Einheit anschließend Informationen über detektierten Landmarken an die Schnittstelle. Der aufwendige Schritt der Landmarkendetektion kann dadurch vorteilhafterweise durch die externe Einheit, beispielsweise einen externen Server, durchgeführt werden. Das Bestimmen einer relevanten Teilmenge der Umgebungsdaten trägt dazu bei, dass möglichst wenig Daten über die Schnittstelle übertragen werden müssen, sodass die zur Verfügung stehende Bandbreite besonders effizient genutzt werden kann.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Systems,
- Figur 2: zeigt ein Ausführungsbeispiel des erfindungsgemäßen Verfahrens und
- Figur 3: zeigt ein weiteres Ausführungsbeispiel des erfindungsgemäßen Verfahrens.

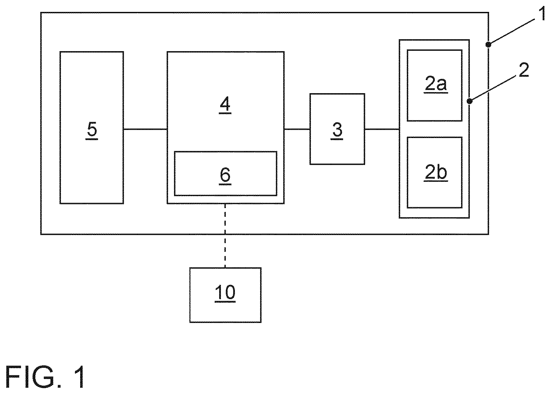

Mit Bezug zu Figur 1 wird ein Fahrzeug mit einem Ausführungsbeispiel des erfindungsgemäßen Systems erläutert.

Das Fahrzeug 1 umfasst eine Erfassungseinheit 2 mit einer Kamera 2a und einer Lidar-Einheit 2b. Die Erfassungseinheit ist mit einer Segmentierungseinheit 3 gekoppelt, die wiederum mit einer Recheneinheit 4 gekoppelt ist. Das Fahrzeug 1 umfasst zudem ein Fahrerassistenzsystem 5, das ebenfalls mit der Recheneinheit 4 gekoppelt ist.

Bei dem Ausführungsbeispiel umfasst die Recheneinheit außerdem eine Schnittstelle 6, über die eine trennbare, drahtlose datentechnische Verbindung zu einer externen Einheit 10 herstellbar ist. Bei dem Ausführungsbeispiel ist die Schnittstelle 6 auf an sich bekannte Weise dazu eingerichtet, über ein Mobilfunknetz eine Verbindung zu einem Netzwerk, insbesondere dem Internet, über ein Mobilfunknetz herzustellen. Die externe Einheit 10 ist bei dem Beispiel als *Backend-Server* ausgebildet.

Bei einem weiteren Ausführungsbeispiel ist die Segmentierungseinheit 3 von einem Steuergerät der Erfassungseinheit 2 umfasst und insbesondere in die Erfassungseinheit 2 integriert. Ein solches Steuergerät kann ferner integral mit der Kamera 2a und/oder der Lidar-Einheit 2b ausgebildet sein. In diesem Fall ist die Segmentierungseinheit 3 dazu ausgebildet, eine umfassende Vorverarbeitung der erfassten Umgebungsdaten durchzuführen, bevor gegebenenfalls eine Übertragung an die Recheneinheit 4 erfolgt.

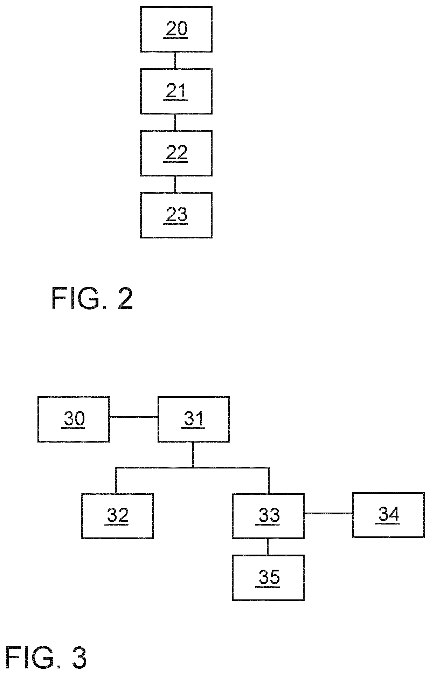

Mit Bezug zu Figur 2 wird ein Ausführungsbeispiel des erfindungsgemäßen Verfahrens erläutert. Dabei wird von dem oben erläuterten Ausführungsbeispiel des erfindungsgemäßen Systems ausgegangen, welches durch die Beschreibung des Verfahrens weiter spezifiziert wird.

In einem Schritt 20 werden erste Umgebungsdaten durch die Erfassungseinheit 2 erfasst. Die ersten Umgebungsdaten umfassen bei dem Ausführungsbeispiel Bilddaten, die durch die Kamera 2a erfasst werden.

Die erfassten ersten Umgebungsdaten werden in einem Schritt 21 an die Segmentierungseinheit 3 übertragen. Die Segmentierungseinheit bestimmt anhand der Bilddaten Teilmengen der ersten Umgebungsdaten. Bei dem Ausführungsbeispiel wird hierzu ein Maschinenlernverfahren verwendet . Es können beliebige geeignete Verfahren aus dem Bereich der künstlichen Intelligenz und neuronalen Netze verwendet werden. Bei dem Beispiel wird ein trainierter Klassifikator eingesetzt, der anhand von Trainingsdaten dazu gebildet wurde, den Bildpunkten der Umgebungsdaten die korrekten Kategorien zuzuordnen.

Bei dem Ausführungsbeispiel wird hierzu eine semantische Segmentierung vorgenommen. Bei der Segmentierung wird jedes Pixel der Bilddaten klassifiziert und einer Kategorie zugeordnet. Zusammenhängende Bereiche von Pixeln einer gemeinsamen Kategorie werden als Segmente bezeichnet und bilden eine gemeinsame Teilmenge der Umgebungsdaten. Diesen Teilmengen ist jeweils zumindest eine Kategorie zugeordnet.

Die bei dem Ausführungsbeispiel zugeordneten Kategorien betreffen Eigenschaften verschiedener Bereiche in der Umgebung des Fahrzeugs 1 und geben beispielsweise an, ob ein Pixel einem Boden, einer Fahrbahn, einer Vegetation, einem bebauten Bereich, einer Säule, einem stehenden oder fahrenden Fahrzeug oder einer Person zugeordnet ist. Alternativ oder zusätzlich können andere Kategorien vorgesehen sein.

Bei dem Ausführungsbeispiel werden die bestimmten Teilmengen bestimmter Kategorien von der Segmentierungseinheit 3 an die Recheneinheit 4 übertragen. Es handelt sich dabei insbesondere um einen gegenüber den erfassten Umgebungsdaten reduzierten Umfang von Daten. Dies führt zu einer verbesserten Ausnutzung der im Fahrzeug 1 zur Verfügung stehenden Bandbreite zur Übertragung von Daten.

Die Entscheidung, für welche Kategorien die entsprechenden Teilmengen übertragen werden sollen, hängt davon ab, welche Landmarkentypen bestimmt werden sollen. Es ist davon auszugehen, dass Landmarken eines bestimmten Typs in Bereichen einer bestimmten Kategorie zu finden sind. So sollen beispielsweise Fahrbahnmarkierungen auf einer Fahrbahn erkannt werden, nicht jedoch ihre Spiegelbilder, etwa an einer reflektierenden Oberfläche eines parkenden Fahrzeugs. Andererseits werden Verkehrsschilder in einem Randbereich neben einer Straße erwartet, sodass die Fahrbahnoberfläche in diesem Fall nicht relevant ist und eine entsprechende Teilmenge von der Detektion ausgenommen werden kann.

Bei weiteren Ausführungsbeispielen werden die gesamten erfassten Umgebungsdaten zusammen mit Informationen über die zuvor bestimmten Teilmengen und deren Kategorien an die Recheneinheit 4 übertragen. In diesem Fall kann bei der Verarbeitung der Daten durch die Recheneinheit 4 für jeweils zu detektierende Landmarkentypen bestimmt werden, welche Teilmengen berücksichtigt werden sollen.

In einem Schritt 22 werden durch die Recheneinheit 4 Landmarken bestimmt. Dies erfolgt anhand derjenigen Teilmengen der Umgebungsdaten, denen für bestimmte Landmarkentypen geeignete Kategorien zugeordnet wurden.

Zur Detektion der Landmarken werden Detektormodule verwendet, die bei dem Ausführungsbeispiel als Softwaremodule zum Detektieren von Landmarken eines bestimmten Landmarkentyps anhand der Umgebungsdaten ausgebildet sind. Bei dem Ausführungsbeispiel werden heuristische Verfahren verwendet, bei denen die Detektormodule eine vorgegebene Regelstruktur zum Erkennen von Landmarken eines bestimmten Typs umfassen. Bei weiteren Ausführungsbeispielen kann die Detektionen anhand eines Maschinenlernverfahrens erfolgen oder es kann eine Mischung verschiedener Verfahren eingesetzt werden, beispielsweise indem ein Maschinenlernverfahren zum Erzeugen oder Aktualisieren eines Detektormodul verwendet wird.

Als Landmarkentypen sind beispielsweise vorgesehen: Fahrbahnmarkierungen, Verkehrsschilder, Lichtsignalanlagen, QR-Codes, Pfosten oder andere Merkmale in der Umgebung des Fahrzeugs 1. Beim Detektieren der Landmarken wird ihr Landmarkentyp bestimmt und es werden, insbesondere abhängig von dem jeweiligen Landmarkentyp, Charakteristika der einzelnen Landmarken ermittelt. Hierzu zählt insbesondere eine Positionsinformation relativ zum Fahrzeug 1.

Bei dem Ausführungsbeispiel erfolgt also die Detektion der Landmarken eines bestimmten Landmarkentyps lediglich anhand von Teilmengen der erfassten Umgebungsdaten, denen eine geeignete Kategorie zugeordnet wurde.

In einem weiteren Schritt 23 werden Informationen über die detektierten Landmarken an das Fahrerassistenzsystem 5 übertragen, welches in dem Ausführungsbeispiel eine landmarkenbasierte Positionsbestimmung vornimmt und die so gewonnenen Informationen für eine autonome Steuerung des Fahrzeugs 1 nutzt. Hierzu werden Kartendaten erfasst, die Positionsinformationen und gegebenenfalls weitere Daten über Landmarken in der Umgebung des Fahrzeugs 1 umfassen. Es wird eine Transformation ausgeführt, durch welche die Positionsdaten der vom Fahrzeug 1 detektierten Landmarken in das Koordinatensystem der Kartendaten überführt werden. Anhand dieser Transformation wird auch die Position des Fahrzeugs 1 bestimmt, insbesondere in Verbindung mit seiner Ausrichtung in dem Koordinatensystem der Kartendaten.

In einem weiteren Ausführungsbeispiel werden Informationen über bestimmte relevante Kategorien der Teilmengen der Umgebungsdaten erzeugt und an die Segmentierungseinheit 3 übertragen. Zum Beispiel wird bestimmt, welche Typen von Landmarken detektiert werden sollen und welche Kategorien hierfür relevant sind. In dem diese Informationen der Segmentierungseinheit 3 zur Verfügung gestellt werden, kann die Bestimmung der Teilmengen gezielt für bestimmte Kategorien erfolgen und es können gezielt die relevanten Teilmengen an die Recheneinheit 4 übertragen werden. Das Volumen der zu übertragenen Daten kann so reduziert werden.

In einem weiteren Ausführungsbeispiel werden weitere Umgebungsdaten durch die Lidar-Einheit 2b erfasst. Die von der Segmentierungseinheit 3 im Schritt 21 ermittelten Informationen werden nun benutzt, auch diese weiteren Umgebungsdaten besonders effizient zu nutzen. Zu diesem Zweck wird bestimmt, welchen räumlichen Bereichen in der Umgebung des Fahrzeugs die Teilmengen der Bilddaten entsprechen, welche die Kamera 2a erfasst hat und die im Schritt 21 kategorisiert wurden. Zum Beispiel wird anhand der von der Kamera 2a erfassten Bilddaten bestimmt, in welchem räumlichen Bereich relativ zum Fahrzeug 1 sich die Fahrbahnoberfläche oder ein weiteres Fahrzeug befindet. Diesem räumlichen Bereich wird die gleiche Kategorie zugeordnet und bei der Auswertung der weiteren Umgebungsdaten, die anhand eines anderen Sensortyps erfasst wurden, werden wiederum Teilmengen ermittelt, die dem räumlichen Bereich entsprechen. Das heißt, die Segmentierung beziehungsweise das Bestimmen von Teilmengen wird lediglich anhand der Bilddaten durchgeführt, während den in den gleichen räumlichen Bereichen erfassten Teilmengen der weiteren Umgebungsdaten die gleichen Kategorien zugeordnet werden. Auch diese Teilmengen werden in Abhängigkeit von den ihnen zugeordneten Kategorien an die Recheneinheit 4 übertragen und zur Landmarkendetektion genutzt.

Bei einem weiteren Ausführungsbeispiel erfolgt die Detektion der Landmarken zumindest teilweise durch die externe Einheit 10. Hierzu werden die Umgebungsdaten nicht vollständig über die Schnittstelle 6 an die externe Einheit 10 übertragen, auch weil die dafür zur Verfügung stehende Bandbreite typischerweise begrenzt ist. Stattdessen werden lediglich diejenigen Teilmengen der Umgebungsdaten übertragen, die durch die Segmentierungseinheit 3 bestimmt und einer für die gewünschten Landmarken geeigneten Kategorie zugeordnet worden sind.

Die externe Einheit 10 kann ferner Anforderungsdaten erzeugen, die beispielsweise Informationen über relevante Kategorien und/oder gewünschten Landmarken umfassen. Diese Anforderungsdaten werden über die Schnittstelle 6 vom Fahrzeug 1 empfangen und die Erfassung der Umgebungsdaten durch die Erfassungseinheit 2 und/oder die Erzeugung der Teilmengen durch die Segmentierungseinheit 3 erfolgen so, dass geeignete Teilmengen bestimmter Kategorien für die gewünschten Landmarken bereitgestellt werden können. Diese geeigneten Teilmengen werden dann an die externe Einheit 10 übertragen.

Die externe Einheit kann die bestimmten Landmarken, insbesondere mit Positionsinformationen, an das Fahrzeug 1 übertragen. Alternativ oder zusätzlich kann die externe Einheit 10 eine Positionsbestimmung für das Fahrzeug 1 durchführen, etwa wie oben für das Fahrerassistenzsystem 5 beschrieben.

Bei den weiteren Ausführungsbeispiel werden die Teilmengen der Umgebungsdaten genutzt, um Trainingsdaten für ein Maschinenlernverfahren, etwa zum Trainieren eines Klassifikator, bereitzustellen. Um den Klassifikator zu aktualisieren oder zu erzeugen werden die Teilmengen mit geeigneten Kategorien verwendet und es wird zunächst bestimmt, in welchen Teilmengen Landmarken des gewünschten Typs vorhanden sind. Anschließend können verschiedene an sich bekannte Lernverfahren verwendet werden.

Mit Bezug zu Figur 3 wird ein weiteres Ausführungsbeispiel des erfindungsgemäßen Verfahrens erläutert. Dieses wird in weiten Teilen analog zu dem oben mit Bezug zu Figur 2 erläuterten Ausführungsbeispiel ausgeführt. Daher werden nachfolgend vor allem die Aspekte erläutert, bei denen sich das Verfahren von dem oben erläuterten Ausführungsbeispiel unterscheidet.

In einem Schritt 30 werden Bilddaten mittels der Kamera 2a erfasst. Die Bilddaten werden in einem weiteren Schritt 31 mittels einer semantischen Segmentierung verarbeitet. Bei dem Ausführungsbeispiel wird ein Verfahren der künstlichen Intelligenz angewandt und ein trainierter Klassifikator ordnet den Pixeln der Bilddaten jeweils eine Kategorie zu. Die segmentierten Bilddaten werden anschließend in einem Schritt 32 einer weiteren Bildverarbeitung zugeführt oder dienen in einem Schritt 33 zum Filtern von Sensordaten.

Beim Filtern von Sensordaten werden Teilmengen der erfassten Umgebungsdaten erzeugt. Hierbei wird nicht nur von den in Schritt 30 erfassten Bilddaten ausgegangen, sondern auch von weiteren Umgebungsdaten, die in einem Schritt 34 zum Beispiel von einem Radar- oder Lidar-Sensor erfasst werden. Zur Filterung werden anhand der segmentierten Bilddaten räumliche Bereiche in der Umgebung des Fahrzeugs 1 bestimmt und die den Segmenten zugeordneten Kategorien werden auch denjenigen Daten zugeordnet, die durch andere Sensoren in den gleichen räumlichen Bereichen erfasst werden. Auf diese Weise werden zum Beispiel Teilmengen der erfassten Radar- oder Lidar-Daten bestimmt, die im Bereich einer Fahrbahn oder eines anderen Fahrzeugs erfasst wurden.

Bei der Filterung im Schritt 33 werden gefilterte Sensordaten erzeugt, die lediglich solche Teilmengen umfassen, die bestimmten Kategorien zugeordnet sind. Die gefilterten Sensordaten sind daher insbesondere zur Detektion bestimmter Landmarkentypen besonders geeignet, beispielsweise wenn bei einer bestimmten Fahrsituationen lediglich bestimmte Typen von Landmarken detektiert werden sollen. So können etwa beim automatischen Parken des Fahrzeugs 1 vor allem Parkplatzmarkierungen auf einer Bodenoberfläche als Landmarken relevant sein.

In einem weiteren Schritt 35 werden die Sensordaten weiter verarbeitet, wobei insbesondere eine Landmarkendetektion durchgeführt wird. Bei der Landmarkendetektion können insbesondere Positionen einzelner Landmarken in der Umgebung des Fahrzeugs 1 bestimmt und zum Bestimmen der Position oder Pose des Fahrzeugs 1 genutzt werden. Des Weiteren kann eine Unterstützungsfunktion durchgeführt werden, etwa ein Parkhauspilot oder ein Parkassistent.

Bei einem weiteren Ausführungsbeispiel erfasst die Lidar-Einheit 2b, beziehungsweise eine beliebige andere Sensoreinheit, gezielt die weiteren Umgebungsdaten in bestimmten räumlichen Bereichen, denen bestimmte Kategorien zugeordnet sind und die zur Landmarkendetektion verwendet werden sollen. Die Sensoreinheit kann hierzu beispielsweise von einem Steuergerät so angesteuert werden, dass der ihr zugeordnete Erfassungsraum entsprechend den räumlichen Bereichen angepasst wird.

### Bezugszeichenliste

- 1: Mobile Einheit; Fahrzeug
- 2: Erfassungseinheit
- 2a: Kamera
- 2b: Anderer Sensortyp; Lidar-Einheit
- 3: Segmentierungseinheit
- 4: Recheneinheit
- 5: Fahrerassistenzsystem
- 6: Schnittstelle
- 10: Externe Einheit
- 20: Erfassen von Umgebungsdaten
- 21: Bestimmen von Teilmengen
- 22: Bestimmen von Landmarken
- 23: Positionsbestimmung
- 30: Erfassen von Bilddaten
- 31: Semantische Segmentierung
- 32: Bildverarbeitung
- 33: Filterung von Sensordaten
- 34: Erfassen weiterer Umgebungsdaten
- 35: Weiterverarbeitung der Sensordaten

## Patentansprüche

1. Verfahren zum Bestimmen von Landmarken in einer Umgebung eines Fahrzeugs (1), bei dem
Bilddaten als erste Umgebungsdaten mittels einer Kamera (2a) erfasst werden; die erfassten ersten Umgebungsdaten auf eine Teilmenge beschränkt werden, wobei beim Bestimmen der Teilmenge Bereiche bestimmt und kategorisiert werden,
in denen bestimmte Landmarkentypen gesucht werden sollen oder nicht zu erwarten sind, indem eine semantische Segmentierung der ersten Umgebungsdaten durchgeführt wird, bei der für Teilmengen der ersten Umgebungsdaten jeweils eine Klassifizierung vorgenommen und ihnen eine Kategorie aus einer Vielzahl verschiedener Kategorien zugeordnet wird, wobei die Kategorien einen Boden, eine Fahrbahn, eine Vegetation, einen bebauten Bereich, eine Säule, ein stehendes oder fahrendes Fahrzeug oder eine Person umfassen und wobei die Klassifizierung für jeden Bildpunkt der erfassten Bilddaten erfolgt, wobei Bildpunkte, die einer gemeinsamen Kategorie zugeordnet sind, zu einzelnen Teilmengen oder Segmenten zusammengefasst werden;
in Abhängigkeit von einem zu detektierenden Landmarkentyp eine Kategorie bestimmt wird, in der eine Landmarke von dem zu detektierenden Landmarkentyp erwartet wird; und
eine auf die Teilmenge der bestimmten Kategorie beschränkte Landmarkendetektion für den zu detektierenden Landmarkentyp durchgeführt wird,
wobei anhand der bestimmten Teilmenge ein räumlicher Bereich in der Umgebung des Fahrzeugs (1) bestimmt wird, wobei der Teilmenge der räumliche Bereich in der Fahrzeugumgebung entspricht, in dem auch anhand anderer Sensoren eines anderen Sensortyps (2b) Daten erfasst werden; und
weitere Umgebungsdaten lediglich in dem räumlichen Bereich erfasst werden; wobei zum Erfassen der weiteren Umgebungsdaten der andere Sensortyp (2b) verwendet wird als zum Erfassen der ersten Umgebungsdaten; und
die Landmarkendetektion ferner anhand der weiteren Umgebungsdaten und in Abhängigkeit von dem räumlichen Bereich durchgeführt wird.

2. Verfahren gemäß einem der vorhergehenden Ansprüche,
**dadurch gekennzeichnet, dass**
die Teilmenge mittels eines Maschinenlernverfahrens bestimmt wird.

3. Verfahren gemäß einem der vorhergehenden Ansprüche,
**dadurch gekennzeichnet, dass**
die Landmarkendetektion anhand eines heuristischen Verfahrens durchgeführt wird.

4. Verfahren gemäß einem der vorhergehenden Ansprüche,
**dadurch gekennzeichnet, dass**
die Teilmenge von einer mobilen Einheit (1) an eine externe Einheit (10) übertragen wird; und
die Landmarkendetektion durch die externe Einheit (10) durchgeführt wird.

5. Verfahren gemäß Anspruch 4,
**dadurch gekennzeichnet, dass**
Anforderungsdaten von der externen Einheit (10) erzeugt werden; und
die Teilmenge in Abhängigkeit von den Anforderungsdaten an die externe Einheit (10) übertragen wird.

6. Verfahren gemäß einem der vorhergehenden Ansprüche,
**dadurch gekennzeichnet, dass**
bei der Landmarkendetektion Positionsdaten für Landmarken des Landmarkentyps bestimmt und ausgegeben werden; wobei
anhand der Positionsdaten eine Pose des Fahrzeugs bestimmt wird.

7. Verfahren gemäß einem der vorhergehenden Ansprüche,
**dadurch gekennzeichnet, dass**
die Landmarkendetektion anhand eines Maschinenlernverfahrens durchgeführt wird.

8. Verfahren gemäß Anspruch 7,
**dadurch gekennzeichnet, dass**
anhand der Teilmenge Trainingsdaten erzeugt werden; und
anhand der Trainingsdaten ein Training für die Landmarkendetektion anhand des Maschinenlernverfahrens ausgeführt wird.

9. System zum Bestimmen von Landmarken in einer Umgebung eines Fahrzeugs (1), umfassend
eine Erfassungseinheit (2) enthaltend eine Kamera (2a) zum Erfassen von Bilddaten als erste Umgebungsdate;
eine Segmentierungseinheit (3) zum semantischen Segmentieren der ersten Umgebungsdaten durch das Beschränken der erfassten ersten Umgebungsdaten auf eine Teilmenge, wobei beim Bestimmen der Teilmenge Bereiche bestimmt und kategorisiert werden, in denen bestimmte Landmarkentypen gesucht werden sollen oder nicht zu erwarten sind, indem bei der semantischen Segmentierung der ersten Umgebungsdaten für Teilmengen der ersten Umgebungsdaten jeweils eine Klassifizierung vorgenommen und ihnen eine Kategorie aus einer Vielzahl verschiedener Kategorien zugeordnet wird, wobei die Kategorien einen Boden, eine Fahrbahn, eine Vegetation, einen bebauten Bereich, eine Säule, ein stehendes oder fahrendes Fahrzeug oder eine Person umfassen und wobei die Klassifizierung für jeden Bildpunkt der erfassten Bilddaten erfolgt, wobei Bildpunkte, die einer gemeinsamen Kategorie zugeordnet sind, zu einzelnen Teilmengen oder Segmenten zusammengefasst werden; und
eine Recheneinheit (4) zum Bestimmen einer Kategorie, in der eine Landmarke von dem zu detektierenden Landmarkentyp erwartet wird, in Abhängigkeit von einem zu detektierenden Landmarkentyp und zum Durchführen einer Landmarkendetektion für den zu detektierenden Landmarkentyp; wobei
die Recheneinheit dazu eingerichtet ist, die Landmarkendetektion auf die Teilmenge der bestimmten Kategorie beschränkt durchzuführen, anhand der bestimmten Teilmenge einen räumlichen Bereich in der Umgebung des Fahrzeugs (1) zu bestimmen, wobei der Teilmenge der räumliche Bereich in der Fahrzeugumgebung entspricht, in dem auch anhand anderer Sensoren eines anderen Sensortyps (2b) Daten erfasst werden; und
die Erfassungseinheit (2) ausgebildet ist, weitere Umgebungsdaten zu erfassen, wobei zum Erfassen der weiteren Umgebungsdaten der andere
Sensortyp (2b) verwendet wird als zum Erfassen der ersten Umgebungsdaten; und
die Recheneinheit dazu eingerichtet ist, die Landmarkendetektion ferner anhand der weiteren Umgebungsdaten und in Abhängigkeit von dem räumlichen Bereich durchzuführen.

10. System gemäß Anspruch 9,
**dadurch gekennzeichnet, dass**
ein Steuergerät die Segmentierungseinheit (3) so angesteuert, dass lediglich die Teilmenge der erfassten Umgebungsdaten an die Recheneinheit (4) übertragen wird.

11. System gemäß einem der Ansprüche 9 oder 10,
**gekennzeichnet durch**
eine Schnittstelle (6) zu einer externen Einheit (10); wobei
das System dazu eingerichtet ist, die bestimmte Teilmenge an die externe Einheit (10) zu übertragen; wobei
die externe Einheit (10) dazu eingerichtet ist, anhand der Teilmenge die Landmarkendetektion durchzuführen.

## Claims

1. Method for determining landmarks in an environment of a vehicle (1), in which
image data are recorded as initial environmental data using a camera (2a);
the recorded initial environmental data are limited to a subset,
wherein, in determining the subset, regions are determined and categorized in which certain landmark types are to be sought or are not to be expected, in that semantic segmentation of the initial environmental data is carried out, in which a classification is made for subsets of the initial environmental data in each case and a category is assigned to them from a number of different categories, wherein the categories include the ground, a roadway, vegetation, a built-up region, a pillar, a stationary or moving vehicle or a person, and wherein the classification is carried out for each pixel of the recorded image data, wherein pixels that are assigned to a common category are grouped into individual subsets or segments;
on the basis of a landmark type to be detected, a category is determined in which a landmark of the landmark type to be detected is expected; and
landmark detection is carried out that is limited to the subset of the determined category for the landmark type to be detected,
wherein a spatial region in the environment of the vehicle (1) is determined using the determined subset, wherein the spatial region in the vehicle environment corresponds to the subset, in which region data are also recorded using other sensors of a different sensor type (2b); and
further environmental data are only recorded **in** the spatial region; wherein the other sensor type (2b) is used to record the further environmental data rather than to record the initial environmental data; and
the landmark detection is further carried out using the further environmental data and on the basis of the spatial region.

2. Method according to any of the preceding claims,
**characterized in that**
the subset is determined using a machine learning method.

3. Method according to any of the preceding claims,
**characterized in that**
the landmark detection is carried out using a heuristic method.

4. Method according to any of the preceding claims,
**characterized in that**
the subset is transferred from a mobile unit (1) to an external unit (10); and
the landmark detection is carried out by the external unit (10).

5. Method according to claim 4,
**characterized in that**
request data are generated by the external unit (10); and
the subset is transferred to the external unit (10) on the basis of the request data.

6. Method according to any of the preceding claims,
**characterized in that**
during the landmark detection, position data for landmarks of the landmark type are determined and output;
with a pose of the vehicle being determined using the position data.

7. Method according to any of the preceding claims,
**characterized in that**
the landmark detection is carried out using a machine learning method.

8. Method according to claim 7,
**characterized in that**
training data are generated using the subset; and
using the training data, training for the landmark detection is performed using the machine learning method.

9. System for determining landmarks in an environment of a vehicle (1), comprising
a recording unit (2) containing a camera (2a) for recording image data as the initial environmental data;
a segmentation unit (3) for semantic segmentation of the initial environmental data by limiting the recorded initial environmental data to a subset, wherein, in determining the subset, regions are determined and categorized in which certain landmark types are to be sought or are not to be expected, in that, in the course of the semantic segmentation of the initial environmental data, a classification is made for subsets of the initial environmental data in each case and a category is assigned to them from a number of different categories, wherein the categories include the ground, a roadway, vegetation, a built-up region, a pillar, a stationary or moving vehicle or a person, and wherein the classification is carried out for each pixel of the recorded image data, wherein pixels that are assigned to a common category are grouped into individual subsets or segments; and
a computing unit (4) for determining a category in which a landmark of the landmark type to be detected is expected, on the basis of a landmark type to be detected, and for carrying out landmark detection for the landmark type to be detected; wherein
the computing unit is configured to carry out the landmark detection that is limited to the subset of the determined category, to determine a spatial region in the environment of the vehicle (1) using the determined subset, wherein the spatial region in the vehicle environment corresponds to the subset, in which region data are also recorded using other sensors of a different sensor type (2b); and
the recording unit (2) is designed to record further environmental data, wherein the other sensor type (2b) is used to record the further environmental data rather than to record the initial environmental data; and
the computing unit is configured to further carry out the landmark detection using the further environmental data and on the basis of the spatial region.

10. System according to claim 9,
**characterized in that**
a control device controlled the segmentation unit (3) in such a way that only the subset of the recorded environmental data is transferred to the computing unit (4).

11. System according to either of claims 9 or 10,
**characterized by**
an interface (6) to an external unit (10);
the system being configured to transfer the determined subset to the external unit (10);
the external unit (10) being configured to carry out the landmark detection using the subset.

## Revendications

1. Procédé permettant de déterminer des repères dans un environnement d'un véhicule (1), dans lequel
des données d'image sont acquises en tant que premières données d'environnement par le biais d'une caméra (2a) ;
les premières données d'environnement acquises sont limitées à un ensemble partiel,
dans lequel, lors de la détermination de l'ensemble partiel, des zones sont déterminées et catégorisées, dans lesquelles des types de repères déterminés doivent être recherchés ou ne sont pas attendus, en réalisant une segmentation sémantique des premières données d'environnement, dans laquelle une classification pour des ensembles partiels des premières données d'environnement est entreprise et une catégorie parmi une pluralité de catégories différentes est attribuée auxdits ensembles partiels, dans lequel les catégories comprennent un sol, une chaussée, une végétation, une zone bâtie, un pilier, un véhicule à l'arrêt ou en mouvement ou une personne, et dans lequel la classification est effectuée pour chaque point d'image des données d'image acquises, dans lequel des points d'image, qui sont attribués à une catégorie commune, sont regroupés en ensembles partiels ou segments individuels ;
en fonction d'un type de repère à détecter, une catégorie est déterminée, dans laquelle un repère du type de repère à détecter est attendu ; et
une détection de repère limitée à l'ensemble partiel de la catégorie déterminée est réalisée pour le type de repère à détecter,
dans lequel, à l'aide de l'ensemble partiel déterminé, une zone spatiale dans l'environnement du véhicule (1) est déterminée, dans lequel l'ensemble partiel correspond à la zone spatiale dans l'environnement de véhicule dans laquelle, à l'aide d'autres capteurs d'un autre type de capteur (2b), des données sont également acquises ; et
d'autres données d'environnement sont acquises uniquement dans la zone spatiale ; dans lequel pour acquérir les autres données d'environnement, l'autre type de capteur (2b) est utilisé par rapport à celui utilisé pour acquérir les premières données d'environnement ; et
la détection de repère est en outre réalisée à l'aide des autres données d'environnement et en fonction de la zone spatiale.

2. Procédé selon l'une des revendications précédentes,
**caractérisé en ce que**
l'ensemble partiel est déterminé par le biais d'un procédé d'apprentissage automatique.

3. Procédé selon l'une des revendications précédentes,
**caractérisé en ce que**
la détection de repère est réalisée à l'aide d'un procédé heuristique.

4. Procédé selon l'une des revendications précédentes,
**caractérisé en ce que**
l'ensemble partiel est transmis d'une unité mobile (1) à une unité externe (10) ; et
la détection de repère est réalisée par l'unité externe (10).

5. Procédé selon la revendication 4,
**caractérisé en ce que**
des données de demande sont générées par l'unité externe (10) ; et
l'ensemble partiel est transmis à l'unité externe (10) en fonction des données de demande.

6. Procédé selon l'une des revendications précédentes,
**caractérisé en ce que**
lors de la détection de repère, des données de position pour des repères du type de repère sont déterminées et émises ; dans lequel
une pose du véhicule est déterminée à l'aide des données de position.

7. Procédé selon l'une des revendications précédentes,
**caractérisé en ce que**
la détection de repère est réalisée à l'aide d'un procédé d'apprentissage automatique.

8. Procédé selon la revendication 7,
**caractérisé en ce que**
des données de formation sont générées à l'aide de l'ensemble partiel ; et
à l'aide des données d'entraînement, un entraînement pour la détection de repère est exécuté à l'aide du procédé d'apprentissage automatique.

9. Système permettant de déterminer des repères dans un environnement d'un véhicule (1), comprenant
une unité d'acquisition (2) contenant une caméra (2a) permettant de détecter des données d'image en tant que premières données d'environnement ;
une unité de segmentation (3) permettant de segmenter de manière sémantique les premières données d'environnement par la limitation des premières données d'environnement acquises à un ensemble partiel, dans lequel, lors de la détermination de l'ensemble partiel, des zones sont déterminées et catégorisées, dans lesquelles des types de repères déterminés doivent être recherchés ou ne sont pas attendus, en ce que, lors de la segmentation sémantique des premières données d'environnement, une classification est respectivement entreprise pour des ensembles partiels des premières données d'environnement et une catégorie parmi une pluralité de catégories différentes leur est attribuée, dans lequel les catégories comprennent un sol, une chaussée, une végétation, une zone bâtie, un pilier, un véhicule à l'arrêt ou en mouvement ou une personne, et dans lequel la classification est effectuée pour chaque point d'image des données d'image acquises, dans lequel des points d'image qui sont attribués à une catégorie commune sont regroupés en ensembles partiels ou segments individuels ; et
une unité de calcul (4) permettant de déterminer une catégorie dans laquelle un repère du type de repère à détecter est attendu, en fonction d'un type de repère à détecter, et permettant de réaliser une détection de repère pour le type de repère à détecter ; dans lequel
l'unité de calcul est destinée à réaliser la détection de repère limitée à l'ensemble partiel de la catégorie déterminée, pour déterminer à l'aide de l'ensemble partiel déterminé une zone spatiale dans l'environnement du véhicule (1), dans lequel l'ensemble partiel correspond à la zone spatiale dans l'environnement de véhicule, dans laquelle des données sont également acquises à l'aide d'autres capteurs d'un autre type de capteur (2b) ; et
l'unité d'acquisition (2) est conçue pour acquérir d'autres données d'environnement, dans lequel l'autre type de capteur (2b) est utilisé pour acquérir les autres données d'environnement par rapport à celui pour acquérir les premières données d'environnement ; et
l'unité de calcul est destinée à réaliser en outre la détection de repère à l'aide des autres données d'environnement et en fonction de la zone spatiale.

10. Système selon la revendication 9,
**caractérisé en ce que**
un appareil de commande commande l'unité de segmentation (3) de telle sorte que seul l'ensemble partiel des données d'environnement acquises est transmis à l'unité de calcul (4).

11. Procédé selon l'une quelconque des revendications 9 ou 10,
**caractérisé par**
une interface (6) vers une unité externe (10) ; dans lequel
le système est destiné à transmettre l'ensemble partiel déterminé à l'unité externe (10) ; dans lequel
l'unité externe (10) est destinée à réaliser la détection de repère à l'aide de l'ensemble partiel.
